# EUROPEAN PATENT APPLICATION

(11) **EP 1 691 092 A1**
(43) Date of publication of application: **16.08.2006**
(21) Application number: 04819953.3
(22) Date of filing: 29.11.2004
(51) Int. Cl.: F16D 3/26

(54) **YOKE FOR UNIVERSAL JOINT**

(30) Priority: 01.12.2003 JP 2003401693
(71) Applicant: JTEKT Corporation, Osaka-shi Osaka 542-8502 (JP); Koyo Machine Industries Co., Ltd., Yao-shi, Osaka 581-0091 (JP)
(72) Inventor: KINME, Shigetaka c/o JTEKT Corporation, Osaka-shi, Osaka 5420081 (JP); KAMIKAWA, Tae c/o JTEKT Corporation, Osaka-shi Osaka 5420081 (JP); UENO, Masako c/o JTEKT Corporation, Osaka-shi, Osaka 5420081 (JP); INOUE, Seijun Koyo Machine Industries Co., Ltd., Yao-shi, Osaka 581-0091 (JP); IKEDA, Katsuhiko Koyo Machine Industries Co., Ltd., Yao-shi, Osaka 581-0091 (JP)
(74) Representative: Steil, Christian
(86) International application number: PCT/JP2004/018088
(87) International publication number: WO 2005/054700

(57) **Abstract**

A universal joint yoke (1) is formed by press-forming a sheet metal (60) whose thickness is 8mm or more. The yoke (1) comprises tabs (2, 3) formed of a pair of mutually parallel flat plates. First end portions (2a, 3a) of the tabs (2, 3) are coupled to each other by a coupling portion (4). A cylindrical portion (5) to which a shaft (30) is joined extends from the coupling portion (4). From second end portions (2b, 3b) to intermediate portions (2c, 3c) of the tabs (2, 3), relief recesses (9, 10) are formed on the inside surfaces (7, 8) of the tabs (2a, 3a), respectively. By the relief recesses (9, 10), a columnar relief space (11) is defined between the tabs (2, 3). The cylindrical portion (5) includes a slit (14) extending in an axial direction of the cylindrical portion (5).

## Description

### BACKGROUND OF THE INVENTION

### Field of the Invention

The present invention relates to a universal joint yoke.

### Description of Related Arts

For example, in an automobile steering device, a universal joint for coupling a steering shaft and an intermediate shaft and a universal joint for coupling an intermediate shaft and a pinion shaft exist. In order to provide excellent steering stability by heightening steering rigidity, as universal joints, so-called forged yokes made of highly rigid forged moldings have been used. However, there exists a problem that the manufacturing cost is high.

Therefore, using so-called press yokes made of press forming has been proposed (see Japanese Unexamined Patent Publication No.10-2339 laid open on January 6, 1998 by the Japanese Patent Office, and Japanese Unexamined Patent Publication No. 2001-12490 laid open on January 6, 2001 by the Japanese Patent Office, for example.)

However, in press yokes, although the manufacturing cost can be reduced, a problem exists that strength and rigidity are low since plate materials are used.

In terms of press yokes, for improvement in rigidity, increasing a thickness of used plate materials can be considered. However, an increase in the thickness of the plate materials may cause interference with peripheral components and cracks or wrinkles during press forming, and therefore, implementation is difficult. As a result, it has been difficult to realize high strength and high rigidity.

It is an object of the present invention to provide a universal joint yoke which is high in rigidity and is low in cost.

### SUMMARY OF THE INVENTION

In order to achieve the object as described above, a preferred mode of the present invention provides a universal joint yoke formed by press-forming a sheet metal. The universal joint yoke comprises a pair of tabs which each are formed of a flat plate extending parallel to a predetermined axis and have a first end portion, a second end portion, and an intermediate portion disposed between the first and second end portions; a coupling portion which has an annular form enclosing the predetermined axis and couples the first end portions of the pair of tabs in a U-shape; and a cylindrical portion which extends from the coupling portion, has a center axis extending along the predetermined axis, and is united to a shaft. In addition, the universal joint yoke comprises a pair of relief recesses which are respectively formed on inside surfaces of the pair of tabs, and disposed from the second end portions to the intermediate portions of the pair of tabs; and a columnar relief space which is defined by the pair of relief recesses between the pair of tabs and has a center axis extending along the predetermined axis, and the cylindrical portion has a slit extending in an axial direction of the cylindrical portion.

According to the present mode, the pair of tabs are formed of parallel flat plates and the relief recesses are provided only at necessary portions of the pair of tabs. Thereby, conditions that an outer width dimension between the pair of tabs should be limited to, for example, 43mm or less for avoiding interference with peripheral components and a sufficient relief space between the tabs for inserting a joint cross therethrough shouldbe secured can be satisfied. Moreover, while satisfying the conditions, the thickness of the tabs can be increased to, for example, 8mm or more to secure a high strength and rigidity. Thus, it becomes possible to use a sheet metal whose thickness is 8mm or more as a material of press molding, whereby torsional rigidity equal to that of a forged yoke can be secured.

### BRIEF DESCRIPTION OF THE DRAWINGS

Fig. 1 is a front view of a universal joint showing a condition wherein a universal joint including a yoke of an embodiment of the present invention is coupled to a shaft.
Fig. 2 is a partially sectioned front view of a yoke.
Fig. 3 is a plan view of a yoke.
Fig. 4 is an end face view of a yoke.
Fig. 5 is a perspective view of a metal plate as a yoke material.
Fig. 6 is a partially sectioned schematic front view of a yoke of another embodiment of the present invention.

### DETAILED DESCRIPTION OF THE PREFERRED EMBODIMENT

A preferred embodiment of the present invention will be described in detail with reference to the accompanying drawings.

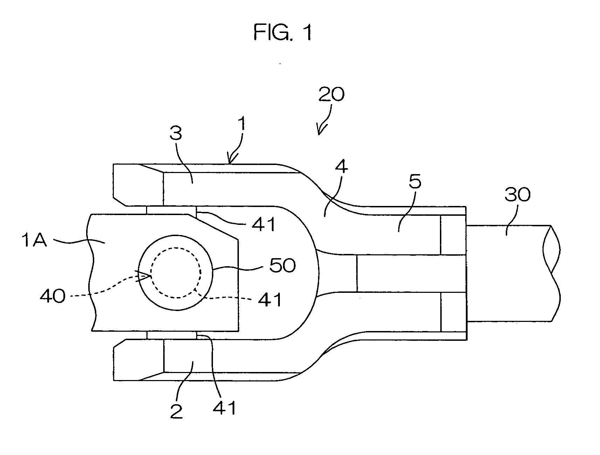

Fig. 1 is a schematic side view of a universal joint for which a yoke according to an embodiment of the present invention is used. Referring to Fig. 1, a universal joint 20 joins two shafts such as a shaft 30 formed of an intermediate shaft and a steering shaft in an automobile steering device. The universal joint 20 comprises a universal joint yoke 1, in which the shaft 30 is fitted. This yoke 1 is coupled to another yoke 1A via a joint cross 40. The another yoke 1A also has the same construction as the yoke 1 does, and respectively supports a corresponding pair trunnions 41 via bearings 50 such as needle roller bearings.

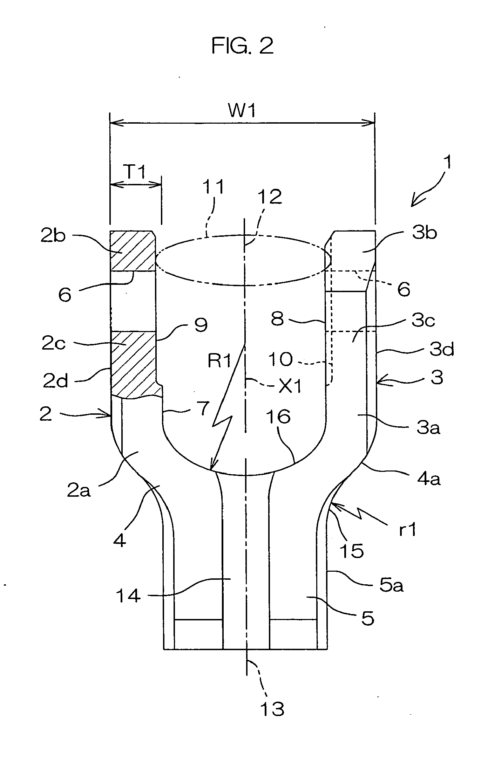

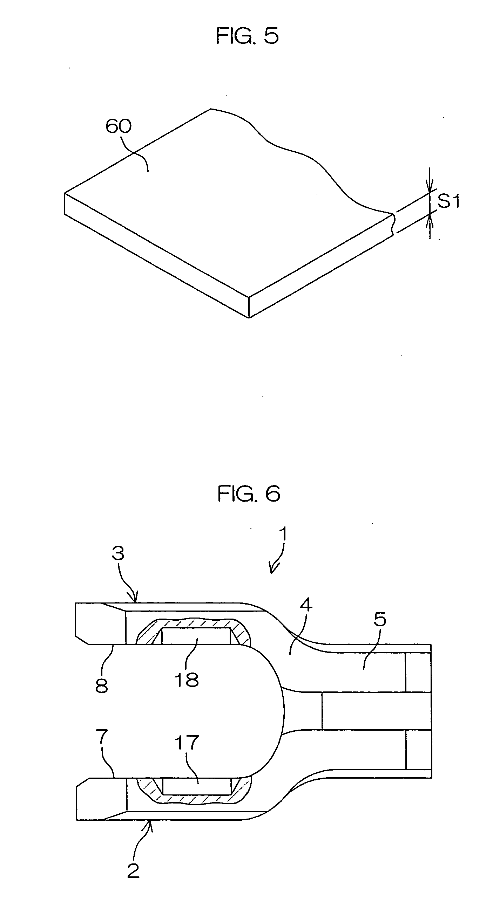

The yoke 1 is provided by press-forming as a material a sheet metal 60 as shown in Fig. 5 whose thickness S1 is 8mm or more (S1≥8mm). Respective portions of the press-formed yoke 1 are formed in corresponding suitable thicknesses. Referring to Fig. 1 and Fig. 2, the yoke 1 is provided with tabs 2 and 3 formed of a pair of flat plates extending parallel to a predetermined axis X1 and to each other, a coupling portion 4 coupling first end portions 2a and 3a of the pair of tabs 2 and 3 in a U-shape, and a shaft coupling cylindrical portion 5 extending from the coupling portion 4.

The tab 2 includes the first end portion 2a, a second end portion 2b, and an intermediate portion 2c disposed between the first and second end portions 2a and 2b. Similarly, the tab 3 includes the first end portion 3a, a second end portion 3b, and an intermediate portion 3c disposed between the first and second end portions 3a and 3b.

In the second end portions 2b and 3b of the respective tabs 2 and 3, a through hole 6 for inserting the corresponding trunnion 41 of the joint cross 40 therethrough is formed by piercing, respectively.

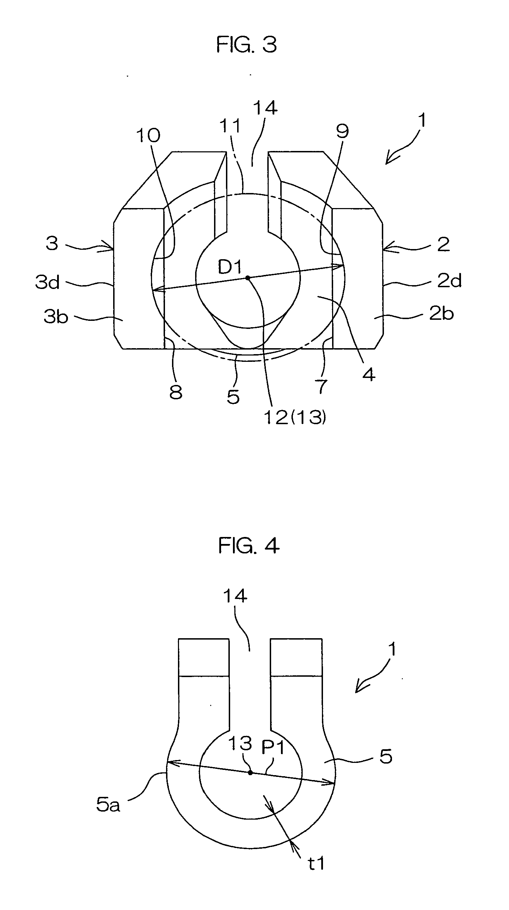

Referring to Fig. 2 and Fig. 3, relief recesses 9 and 10 are respectively formed on inside surfaces 7 and 8 of the respective tabs 2 and 3 and disposed from the second end portions 2b, 3b to the intermediate portions 2c, 3c of the respective tabs 2, 3. By these relief recesses 9 and 10, a columnar relief space 11 is defined between the pair of tabs 2, 3. A center axis 12 of the relief space 11 is on the axis identical to a center axis 13 of the cylindrical portion 5. This relief space 11 serves as a relief when a joint cross is introduced between the pair of tabs 2 and 3 from the side of the second end portions 2b and 3b. As a diameter D1 of the relief space 11, 30mm or more is preferable.

It is preferable that a thickness T1 of the respective tabs 2 and 3 is set to 8mm or more (T1≥8mm). In addition, the pair of tabs 2 and 3 have outside surfaces 2d and 3d, respectively. It is preferable that a distance W1 between these outside surfaces 2d and 3d (equivalent to outer measurements of the pair of tabs 2 and 3) is set to 43mm or less (W1≤43mm).

Referring to Fig. 3, the coupling portion 4 has an annular form enclosing the predetermined axis X1.

Referring to Fig. 2 and Fig. 4, the cylindrical portion 5 has a slit 14 as a slot extending in the axial direction. A thickness t1 of the cylindrical portion 5 is thinner than the thickness T1 of the tabs 2 and 3 (t1<T1). In addition, it is preferable that the thickness t1 of the cylindrical portion 5 is set to 6mm or more (t1≥6mm). It is preferable that an outside diameter P1 of the cylindrical portion 5 is set to 28mm or more (P1≥28mm).

Again referring to Fig. 2, it is preferable that a section between an outer circumferential surface 5a of the cylindrical portion 5 and an outside surface 4a of the coupling portion 4 is connected by a curved portion 15 and a radius of curvature r1 of this curved portion 15 is set to 8mm or more (r1≥8mm).

The coupling portion 4 coupling the pair of tabs 2 and 3 in a U-shape includes an inner bottom portion 16 (equivalent to a breast part connecting the pair of tabs 2 and 3.) It is preferable that a radius of curvature R1 of this inner bottom portion 16 is set to 20mm or more (R1≥20mm). In addition, a shaving process has been applied to the inner bottom portion 16.

According to the present embodiment, the pair of tabs 2 and 3 are provided not as inwardly curved plates but as parallel flat plates, and the relief recesses 9 and 10 are provided only at necessary portions of the pair of tabs 2 and 3. Thereby, it becomes possible to limit the distance W1 between the outside surfaces 2d and 3d of the pair of tabs 2 and 3 to, for example, 43mm or less for avoiding interference with peripheral components and at the same time to secure a sufficient volume of the relief space 11 for inserting between the pair of tab spaces 2 and 3 the joint cross therethrough. Moreover, the thickness T1 of the tabs 2 and 3 can be increased to, for example, 8mm or more to secure high strength and rigidity.

In addition, it becomes possible to use a sheet metal 60 whose thickness is 8mm or more as a material of press molding, whereby torsional rigidity equal to that of a forged yoke can be secured. Accordingly, application to a universal joint on both sides of an intermediate shaft of an automobile steering device is appropriate.

The shaft coupling cylindrical portion 5 can be heightened in structural strength by means of the shape. In the such cylindrical portion 5 employing a shape advantageous in terms of strength, when the outside diameter P1 of the cylindrical portion 5 is provided as 28mm or more, a cross-sectional area of the cylindrical portion 5 can be sufficiently increased to secure strength and rigidity, even when the thickness t1 of the cylindrical portion 5 is provided, within the condition of 6mm or more, thinner than the thickness T1 of the tabs 2 and 3.

Moreover, by providing the outside diameter P1 of the cylindrical portion 5 as 28mm or more, a connection part from said cylindrical portion 5 to the coupling portion 4 can be provided as a curved form such that no wrinkles or cracks are produced.

In addition, since the curved portion 15 is provided at a part connecting the outer circumferential surface 5a of the cylindrical portion 5 and the outside surface 4a of the coupling portion 4 and the radius of curvature r1 of this curved portion 15 is provided as 8mm or more, production of wrinkles or cracks at the part connecting the outer circumferential surface 5a of the cylindrical portion 5 and the outside surface 4a of the coupling portion 4 can be prevented.

In addition, since the radius of curvature R1 of the inner bottom portion 16 of the coupling portion 4 coupling the pair of tabs 2 and 3 in a U-shape is provided as 20mm or more, production of wrinkles or cracks at the inner bottom portion 16 can be prevented. Moreover, at the time of press forming, by applying the shaving process to the inner bottom portion 16, production of wrinkles or cracks at the inner bottom portion 16 can be securely prevented.

The present invention is not limited to the embodiment as described above, and, for example, in a case where the universal joint has a great operation angle for avoiding interference, further relief recesses 17 and 18 may be provided at necessary positions of the inside surfaces 7 and 8 of the tabs 2 and 3, as shown in Fig. 6. Here, in Fig. 6, illustration of the relief recesses 9 and 10 are omitted.

Although the present invention has been described in detail as in the above by concrete embodiments, a person skilled in the art who has understood the above-described contents will easily conceive modifications, alterations, and equivalents thereof. Accordingly, the present invention should have a scope of claims and a scope of equivalents thereof.

The present application is a counterpart of Japanese Patent Application No. 2003-401693 submitted on December 1, 2003 to the Japanese Patent Office, and the entire disclosure of this application is herein incorporated by citation.

## Claims

1. A universal joint yoke formed by press-forming a sheet metal whose thickness is 8mm or more, comprising:
a pair of tabs which each are formed of a flat plate extending parallel to a predetermined axis and have a first end portion, a second end portion, and an intermediate portion disposed between the first and second end portions;
a coupling portion which has an annular form enclosing the predetermined axis and couples the first end portions of the pair of tabs in a U-shape;
a cylindrical portion which extends from the coupling portion, has a center axis extending along the predetermined axis, and is united to a shaft;
a pair of relief recesses which are respectively formed on inside surfaces of the pair of tabs and disposed from the second end portions to the intermediate portions of the pair of tabs; and
a columnar relief space which is defined by the pair of relief recesses between the pair of tabs and has a center axis extending along the predetermined axis, wherein
the cylindrical portion includes a slit extending in an axial direction of the cylindrical portion.

2. The universal joint yoke according to Claim 1, wherein
the respective tabs have a thickness of 8mm or more.

3. The universal joint yoke according to Claim 2, wherein
the pair of tabs each include an outside surface, and a distance between the outside surfaces of the pair of tabs is 43mm or less.

4. The universal joint yoke according to Claim 3, wherein
the relief space has a diameter of 30mm or more.

5. The universal joint yoke according to Claim 1, wherein
the pair of tabs respectively have a through hole, the through holes being disposed mutually coaxially.

6. The universal joint yoke according to Claim 1, wherein
a thickness of the cylindrical portion is thinner than a thickness of the respective tabs.

7. The universal joint yoke according to Claim 6, wherein
the thickness of the cylindrical portion is 6mm or more, and an outside diameter of the cylindrical portion is 28mm or more.

8. The universal joint yoke according to Claim 1, wherein
a curved portion connecting an outer circumferential surface of the cylindrical portion to an outside surface of the coupling portion is provided, and a radius of curvature of the curved portion is 8mm or more.

9. The universal joint yoke according to Claim 1, wherein
the coupling portion coupling the first end portions of the pair of tabs in a U-shape includes an inner bottom portion, and a radius of curvature of the inner bottom portion is 20mm or more.

10. The universal joint yoke according to Claim 9, wherein
a shaving process has been applied to the inner bottom portion of the coupling portion.

11. The universal joint yoke according to Claim 1, wherein
on the inside surfaces of the pair of tabs, a pair of relief recesses each corresponding to only a part of the intermediate portions of the pair of tabs are formed, respectively.
